# EUROPÄISCHE PATENTANMELDUNG

(11) **EP 0 908 621 A1**
(43) Veröffentlichungstag der Anmeldung: **14.04.1999**
(21) Anmeldenummer: 97117380.2
(22) Anmeldetag: 08.10.1997
(51) Int. Cl.: F03D 3/06

(54) **Wind-oder Wasserrad**

(71) Anmelder: Stubenhofer, Ludwig, 93199 Zell (DE)
(72) Erfinder: Stubenhofer, Ludwig, 93199 Zell (DE)

(57) **Zusammenfassung**

Neuartiges Wind- oder Wasserrad

Neuartiger Ventilator

Grundlegend für diese Vorrichtung ist die Verbindung zweier Zahnräder mittels einer Kette. Das kleinere Zahnrad befindet sich feststehend in der Mitte und wird vom größeren (Zahl der Zähne genau doppelt soviel) umkreist.

Auf dem größeren äußeren Zahnrad ist eine Widerstandsfläche (Segel) befestigt. Diese bietet während einer Kreisbewegung dem Wind oder Wasser auf der einen Seite in voller Breite Widerstand, während sie auf der anderen Seite, gegen den Wind kreisend, so gut wie keinen Widerstand darstellt.

## Beschreibung

Es handelt sich um eine einfache Vorrichtung aus dem Bereich der Mechanik. Das Grundprinzip ist die Verbindung zweier Zahnräder mittels einer Kette wie es vom Fahrrad her allgemein bekannt ist. Das kleinere Zahnrad ist feststehend in der Mitte angebracht, es ist Dreh- und Angelpunkt der Vorrichtung. Das äußere größere Zahnrad bewegt sich auf einer Kreisbahn um das kleinere Rad in der Mitte. Es ist zudem drehbar gelagert und beschreibt eine halbe Eigendrehung während es sich einmal um das Zentralrad gedreht hat. Der Abstand zwischen beiden Rädern ist ohne Bedeutung. Grundlegend ist das Größenverhältnis beider Räder von 1 zu 2, genauer, das kleinere Zahnrad besitzt genau die halbe Zahl der Zähne des Größeren. Beide Räder sind nicht nur durch eine Kette, sondern auch durch einen Auslegerarm miteinander verbunden, der sie auf Abstand hält. Dieser ist drehbar an der Mittelachse befestigt.

Die Art der Vorrichtung bewirkt nun, daß das Segel (Widerstandsfläche) auf der einen Seite Senkrecht zur Windrichtung auf der anderen Seite parallel dazu steht. Dadurch ergibt sich ein Kraftüberschuß auf der einen Seite, der die Vorrichtung in Drehung versetzt, welche dann mittels Generator zur Stromerzeugung genutzt werden soll.

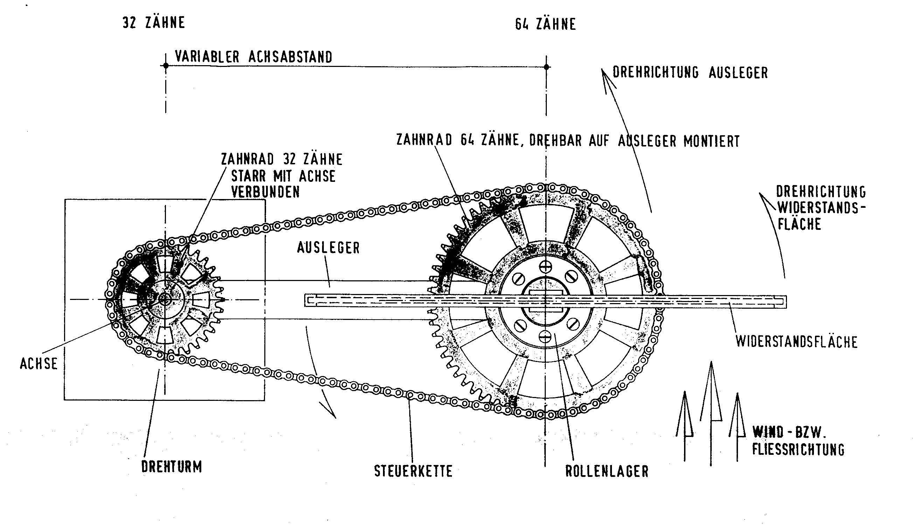

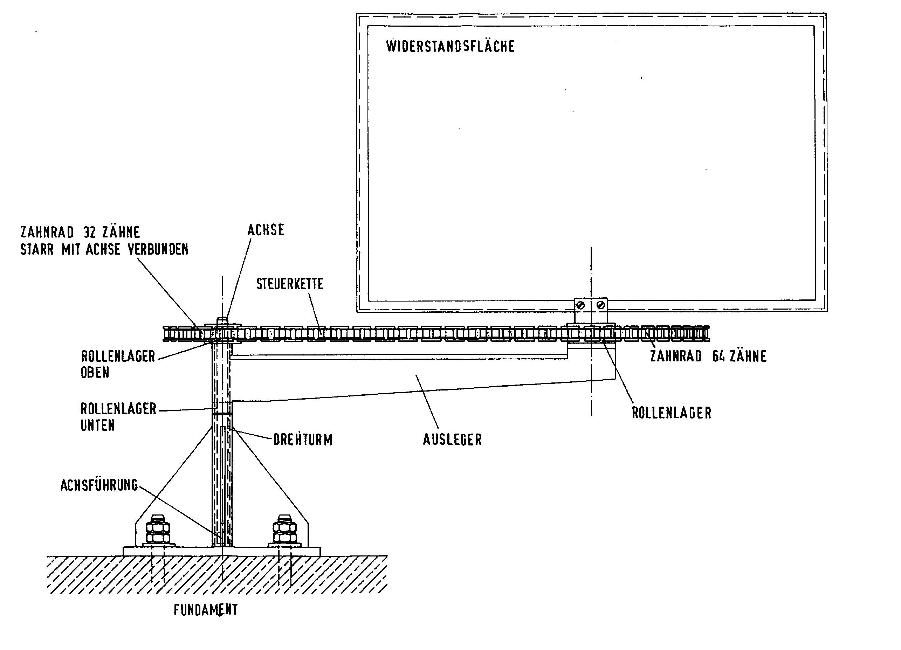

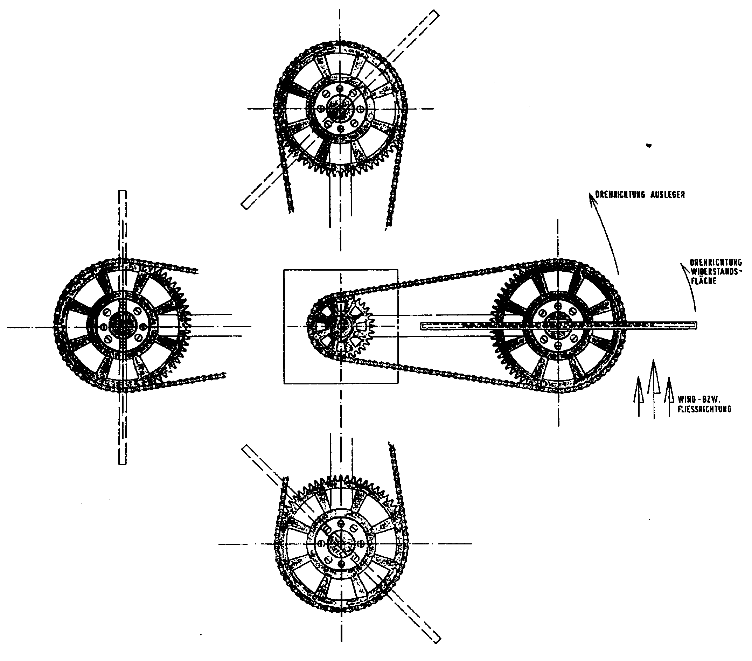

## Patentansprüche

1. Mechanische Vorrichtung
bestehend aus zwei Zahnrädern und einer sie verbindenden Kette
verwendbar als: Windrad, Wasserrad und Ventilator
